# EUROPEAN PATENT SPECIFICATION

(11) **EP 3 301 686 B1**
(45) Date of publication and mention of the grant of the patent: **11.03.2020**
(21) Application number: 16207211.0
(22) Date of filing: 28.12.2016
(51) Int. Cl.: H01B 1/12, C08K 7/18, C08K 9/06

(54) **PROCESS FOR SYNTHESIS OF CONDUCTIVE SILVER/POLYANILINE (AG/PANI) NANOCOMPOSITES**
VERFAHREN ZU HERSTELLUNG LEITENDER SILBER/POLYANILIN (AG/PANI) NANOKOMPOSITE
PROCÉDÉ DE SYNTHÈSE DES NANOCOMPOSITES D'ARGENT / POLYANILINE (AG / PANI) CONDUCTEURS

(30) Priority: 29.09.2016 SI 201600240
(43) Date of publication of application: 04.04.2018
(73) Proprietor: Univerza v Mariboru Fakulteta za strojnistvo, 2000 Maribor (SI); IOS, Institut za okoljevarstvo in senzorje, d.o.o., 2000 Maribor (SI)
(72) Inventor: Ramezani, Maedeh, Tehran (IR); Kosak, Aljosa, 3000 Celje (SI); Lobnik, Aleksandra, 2311 Hoce (SI)
(74) Representative: Flak, Antonija

(56) References cited:
- RONGHUI GUO ET AL: "Microwave-assisted synthesis of silver nanoparticles on cotton fabric modified with 3-aminopropyltrimethoxysilane", JOURNAL OF APPLIED POLYMER SCIENCE, 26 June 2013 (2013-06-26), pages n/a-n/a, XP055081486, ISSN: 0021-8995, DOI: 10.1002/app.39636
- CHOUDHURY ET AL: "Polyaniline/silver nanocomposites: Dielectric properties and ethanol vapour sensitivity", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 138, no. 1, 24 April 2009 (2009-04-24), pages 318-325, XP026033845, ISSN: 0925-4005, DOI: 10.1016/J.SNB.2009.01.019 [retrieved on 2009-01-21]

## Description

### Field of the invention

The present invention belongs to the field of chemical and electrochemical processes for preparing conductive nanocomposites silver/polyaniline (Ag/PANI), more precisely to the field of processes for preparing conductive silver/polyaniline nanocomposites using functional alkoxysilanes as capping agents.

### Technical problem

The technical problem, which is solved by the present invention, is the design of a process for preparing conductive silver/polyaniline (Ag/PANI) nanocomposites, which will be useful in a broad field of textile industry. The process should allow formation of nanostructures of homogenous sizes and morphology, with conductive characteristics in range 0.02 (S/cm) - 0.003 (S/cm). The process should be performed at low reaction temperature with use of environmentally friendly chemicals and should eliminate the use of highly volatile toxic organic solvents, high temperatures or pressures.

### State of the art

With the development of nanotechnology many different fields of applications of nanostructured material have emerged. The conductive nanomaterials have become of a special interest, especially in fields of microelectronics, photo catalysis, magnetic devices, batteries, electrodes, electromagnetic sensors, corrosion protective coatings, microwave absorption, light emitting diodes, catalysis, conductive inks, thin film pastes and adhesives for various electronic components, in photonics and photography. Due to their features and functions, their use in various textile fields is rising, including high-performance sportswear, wearable displays, new elements for health monitoring, antibacterial and antistatic performance. Besides the textiles, conductive nanoparticles enable advanced solutions in the field of electronics, environmental protection, biotechnology, agriculture, computer science, informatics and production of new advanced nanostructured materials.

Conductive silver doped polyaniline nanocomposite materials are gaining importance in many developing fields. They can be found in the field of optoelectronics and electronics, their magnetic, electro and chemical properties lead to a wide range of other technological applications, such as rechargeable batteries, electrodes, electromagnetic interference shielding (EMI), sensors, corrosion protection coatings, microwave absorption, light emitting diodes, chemical and biological sensors, actuators and microelectronic devices. Their features are basically determined with conductivity/resistivity characteristics of the polymer matrices affected by the type and the content of conductive metal dopant; with low specific density; with high specific surface area; with hydrophilicity/hydrophobicity; and with physical-chemical stability.
There are a variety of techniques for the preparation of conductive silver/polyaniline nanocomposites, which can be roughly divided into chemical or electrochemical methods. The chemical methods, which are based on high affinity of metal ions for polyaniline, include the polymerization of aniline monomer with simultaneous reduction of metal ions and the photo-induced polymerization. Electrochemical techniques are methods for preparations of the silver/polyaniline composites in the presence of Ag (silver) nanoparticles.

According to the so far available data from the literature, the preparation of conductive silver/polyaniline nanocomposites in the conventional manner with the use of polyaniline is being carried out in some basic steps, including reduction of metal ions in the presence of polyaniline in a suitable medium, usually in an aqueous or organic medium, and with oxidation agent, or by photolysis that leads to the polymerization.

In the so far available literature there is no known method for preparation of conductive silver/polyaniline nanocomposites with the use of silver nanoparticles and aminopropyltrimethoxysilane (APTMS) as a capping agent. In literature, many methods using polyaniline matrix and metal silver nanoparticles as inclusions to prepare silver/polyaniline nanocomposites, are known.

Jing et al. have described in the article "Synthesis and characterization of Ag/polyaniline core-shell nanocomposites based on silver nanoparticles colloid" published in journal Materials Letters in year 2007, the synthesis via in situ chemical oxidation polymerization of aniline based on mercaptocarboxylic acid as capping agent and colloidal Ag nanoparticles. The morphology and structure of the products were characterized by scanning electron microscopy, which suggested that the product exhibits spherical structure with diameter ranging from 50 to 100 nm.

In the article "Polyaniline/silver nanocomposites: Dielectric properties and ethanol vapour sensitivity" (Sensors and Actuators B 138 (2009), 318-325) Choudhury mentions polyaniline/silver (PANI/Ag) nanocomposites synthesis prepared by in-situ oxidative polymerization of aniline monomer in the presence of different concentrations of Ag nanoparticles. TEM images showed that the particle size increases with increasing concentration of Ag in the composite, due to the aggregation effect. The conductivity and dielectric properties of pure PANI and PANI/Ag nanocomposites were measured in the frequency range of 103-106 Hz. Results showed higher conductivity, dielectric constant and dielectric loss of PANI/Ag nanocomposites, compared to those of pure PANI.

In the article "Optical and electrical transport properties of polyaniline / silver nanocomposite" (Synthetic Metals 160 (2010), 1566-1573) Gupta et al. have described the preparation of polyaniline-silver nanocomposite with chemical oxidative polymerization of aniline and ammonium peroxydisulphate as oxidative agent in the presence of negatively charged silver nanoparticles. Silver nanoparticles were prepared by citrate reduction method. The electrical conductivity of polyaniline-silver nanocomposite increases with increased silver nanoparticle content, compared to that of pure polyaniline.

Khanna et al. mention in the article "Synthesis of Ag/polyaniline nanocomposite via an in situ photo-redox mechanism" (Materials Chemistry and Physics 92 (2005), 214-219) their preparation of silver/polyaniline nanocomposites with reduction of silver salt in aniline by mild photolysis performed by radiation from 8W UV lamp, with long wavelength (365 nm) and short wavelength (254 nm). The reduction of the silver salt in aqueous aniline leads to the formation of silver nanoparticles which in turn catalyze oxidation of aniline to polyaniline. However, this method takes long time, about 96 h for the synthesis of silver/polyaniline nanocomposites.

In patent application US6045977A is described a method for making a device in which a conductive polyaniline layer is formed on a substrate and patterned into a desired configuration. The polyaniline layer is formed by applying a polyaniline salt solution, which combines a mixture of polyaniline and an additive, dissolved in a solvent on the substrate. Thereafter, the polyaniline layer is patterned by delineating in such layer at least one region having a conductivity less than about 10⁻⁶ S/cm.

Patent application US5716550A describes a method for electrically conductive elements, such as imaging elements that can be prepared by applying electrically conductive coatings.

Compared to so far known processes for preparing conductive silver/polyaniline nanocomposites, which involve the reduction of metal ions in the presence of preformed polyaniline, or silver nanoparticles are protected by polymers such as polymethylmethacrylate (PMMA), poly(vinylalcohol) (PVA), poly(vinylpyrolidone) (PVP), polystyrene (PS) etc., the invention differs from them in that the preparation process involves synthesis of silver nanoparticles with a new growth limiting agent and for homogenous distribution of silver nanoparticles into the polymer matrix for improvement of its conductivity and the use of UV to induce quick polymerization, the polymerization is rather conducted simultaneously in an acidic medium and at room temperature without any inert protection atmosphere such as nitrogen, argon etc.

### The solution of the technical problem

The essence of the process for synthesis of conductive silver/polyaniline (Ag/PANI) nanocomposites is that it includes high-temperature polyol synthesis based on organic colloidal solution of silver nanoparticles with the particle size distribution 70 ± 20 nm with the use of functional trialkoxysilane molecules as capping agents, followed by admixing the prepared colloidal silver solution into organic aniline solution, and finally the polymerization of aniline monomers using potassium iodate at room temperature in an acidified aqueous medium having a pH value 0.5 and aniline-to-potassium iodate molar ratio 1.

Colloidal solutions of silver nanoparticles have such features, that they allow textile treatment as a dopant so that these textiles gain quality. Improved are features such as conductivity (conductivities can be close to those of metals), antistatic properties, antimicrobial qualities, fire resistance and depending of the dopant, even mechanical properties. This combines electrical properties of the metal with advanced properties of polymer such as low weight, easier treatments, corrosion resistance and low price.

The process for synthesis of conductive silver/polyaniline (Ag/PANI) nanocomposites is composed of following steps:
a) heating-up a polyol medium up to 160 ºC and polyol synthesis of yellow colloidal ethylene glycol solution of silver seeds;
b) cooling-down of the prepared colloidal silver ethylene glycol solution to room temperature and drop-wise addition of the functional trialkoxysilanes as capping agents;
c) stirring for 20 hours at room temperature, resulting in the formation of brown-to-green colloidal silver ethylene glycol solution;
d) sedimentation with centrifugation to obtain the brownish-to-green colloidal solution;
e) addition of the prepared brown-to-green colloidal silver ethylene glycol solution to the acidic aniline solution having pH of 0.5;
f) drop-wise addition of the acidic aqueous solution of potassium iodate, resulting in the formation of green colloidal solution;
g) stirring for 2h at a room temperature and aging the solution at 3 ºC for 24 h in order to complete the polymerization process;
h) centrifugation and rinsing of the sediment with double distilled water, ethanol and dried in oven at 45 °C for 5 hours.

First in step a) colloidal silver seeds are prepared by the polyol synthesis which is based on polyol method. A variety of inorganic silver salts could be used as a starting reagent, preferentially AgNO₃ solution in concentration 0.1 mol/L, preferentially silver nitrate ethylene glycol solution with the concentration 0.1 mol/L.

The reaction conditions are:
- temperature 160 ºC;
- time 1 hour;
- pH 7 to 8; and
- molar ratio between aminopropyltrimethoxysilane (APTMS) and silver nitrate has varied from 0.5, 1, 2.2, 3.4, 4.4, 6.8.

Silver nanoparticles synthesized according to this procedure, are mostly nanohexagone shaped, multiply twinned (with multiple twin borders) and with average particle size in the range of 10 < *D_{AVG}* < 70 nm.

In the next step b) the prepared colloidal silver ethylene glycol solution with the concentration 0.1 mol/L is cooled-down to room temperature. While stirring with magnetic stirrer, functional trialkoxysilane as the capping agent is added drop-wise to the 15 ml of the prepared colloidal ethylene glycol solution of silver nanoparticles.

The most often used trialkoxysilane precursors as capping agents have a general formula R*Si(OR')₃ wherein the R' is chosen from a group consisting of methyl, ethyl, propyl, butyl and hexyl, and R* is chosen from a functional, mostly donor organic groups, like amino, thiol, hydroxy, carboxyl, cyan, phosphate, nitric, sulphonate. Preferentially the trialkoxysilane precursor is aminopropyltrimethoxysilane (AMPTS) with concentration being in the range between 0.0185 mol/L and 0.22 mol/L, which corresponds to the molar ratio AMPTS-to-AgNO₃ in the range between 0.5 and 6.8.

In step c) the prepared solution rests for 20 hours at a room temperature. The reaction results in the formation of brown-to-green colloidal ethylene glycol solution of silver nanoparticles. This solution is in the step d) centrifuged for 10 min at speed of 7500 rpm.

Afterwards, 0.1 to 5.0 ml of the prepared brown-to-green colloidal solution of silver nanoparticles with mass concentration 0.1 mol/L is in step e) added to the 150 mL of acidic aqueous solution of aniline monomers with the concentration 0.14 mol/L and having the pH value 0.5.

In order to initiate polymerization in the step f) the acidic aqueous solution of potassium iodate having the pH 0.5, is added drop-wise to the solution of 150 ml from step e), having the concentration 0.14 mol/L, which results in the formation of a green colloidal solution.

In the step g) the solution is being stirred for 2 h at room temperature and further aged at 3 ºC in the refrigerator for 24 h in order to complete the polymerization process. The polymerized product is in the step h) centrifuged and rinsed with double distilled water and ethanol and dried in the oven at 45 °C for 5 hours.

Results of the process, according to the invention, are conductive silver/polyaniline nanocomposites with resistivity in the range from 300 Ω to 10 Ω and conductivity in the range from 0.003 (S/cm) to 0.1 (S/cm).

Conductive silver/polyaniline nanocomposites prepared according to the invention were characterized using the transmission electron microscopy (TEM), Fourier infrared spectroscopy (FTIR), thermogravimetry analysis (TGA), differential scanning calorimetry (DSC), analysis of specific surface area (BET) and conductivity/resistivity measurements.

### Embodiment 1: Synthesis of colloidal silver (Ag) nanoparticles with APTMS capping agent (molar ratio of APTMS-to-AgNO₃ = 0.5)

Silver nanoparticles are synthesized by a polyol method. A polyol synthesis involves heating a polyol with an inorganic salt and a capping agent to generate metal colloids. In the case of silver nanostructures, 17 mol/L ethylene glycol (EG), 0.1 mol/L AgNO₃, and 5.55 mol/L aminopropyltrimethoxysilane (APTMS) serve as the polyol, inorganic salt and capping agent, respectively.

In a typical procedure, 10 ml of 98% ethylene glycol (EG) is heated in a glass reactor up to 160 °C in an oil bath. It is heated for 60 min while stirring with a speed of 260 rpm. Afterwards, 5 ml of EG solution of silver nitrate (0.1M) is added dropwise in a 30 seconds span to the heated EG solution at 160 ºC, resulting in the formation of yellow colloidal solution, indicating the formation of silver seeds.

After 5 min of heating, the glass reactor is removed from the oil bath and is stirred at room temperature until the silver solution is cooled-down to the room temperature. Then 0.05 ml of 97% APTMS, is added dropwise to the 15 ml of the prepared colloidal silver solution at room temperature until the molar ratio APTMS-to-AgNO₃ of 0.5 is obtained. The colour of colloidal silver nanoparticles solution changes from light yellow to brown and then green-to-black. Then the reaction is maintained for further 20 hours at room temperature, 7 < pH < 8. The brownish solution is then purified by centrifugation for 10 min at speed of 7500 rpm.

### Embodiment 2: Synthesis of colloidal silver (Ag) nanoparticles with APTMS capping agent (molar ratio of APTMS-to-AgNO₃ = 1.0)

Silver nanoparticles are synthesized by polyol method. A polyol synthesis involves heating a polyol with an inorganic salt and a capping agent to generate metal colloids. In the case of silver nanostructures, 10 ml ethylene glycol (EG) 98%, 0.1 mol/L AgNO₃, and 0.1 ml of 97% aminopropyltrimethoxysilane (APTMS) serve as the polyol, inorganic salt, and capping agent, respectively.

In a typical procedure, 10 ml of ethylene glycol (EG, 98%) in a glass reactor is heated up to 160 °C in an oil bath. It is heated for 60 min while stirring with a speed of 260 rpm. Afterwards, 5 ml of EG solution of silver nitrate (0.1M) was added dropwise in a 30 seconds span to the heated EG solution at 160 °C, resulting in the formation of yellow colloidal solution, indicating the formation of silver seeds.

After 5 min of heating at 160 °C, the glass reactor is removed from the oil bath and is stirred at room temperature until the silver solution is cooled-down to room temperature. Then 0.1 ml of 97% APTMS (5.55 mol/L), is added dropwise to the 15 ml of the prepared colloidal silver nanoparticles solution at room temperature until the molar ratio APTMS-to-AgNO₃ of 1.0 is obtained. The colour of colloidal silver nanoparticles solution changes from light yellow to brown. Then the reaction is maintained for further 20 hours at room temperature. The as-obtained products are then centrifuged for 10 min at speed of 7500 rpm. The brownish-green solution with black precipitate is then rinsed and centrifuged for 10 min at speed of 7500 rpm.

### Embodiment 3: Synthesis of colloidal silver (Ag) nanoparticles with APTMS capping agent (molar ratio of APTMS-to-AgNO₃ = 2.2)

Silver nanoparticles are synthesized by polyol method. A polyol synthesis involves heating a polyol with an inorganic salt and a capping agent to generate metal colloids. In the case of silver nanostructures, ethylene glycol (EG, 98%), AgNO₃, aminopropyltrimethoxysilane (APTMS, 97%) serve as the polyol, inorganic salt, and capping agent, respectively.

In a typical procedure, 10 ml of ethylene glycol (EG) 98% in a glass reactor is heated up to 160 °C in an oil bath. It is heated for 60 min while stirring with a speed of 260 rpm. Afterwards, 5 ml of EG solution of silver nitrate (0.1M) is added dropwise in a 30 seconds span to the heated EG solution at 160 ºC, resulting in the formation of yellow colloidal solution, indicating the formation of silver seeds.

After 5 min of heating at 160 °C, the glass reactor is removed from the oil bath and is stirred at room temperature until the silver solution is cooled-down to room temperature. Then 0.2 ml of 97% aminopropyltrimethoxysilane (5.55 mol/L), was added dropwise to the 15 ml of the prepared colloidal silver nanoparticles solution at room temperature until the molar ratio APTMS-to-AgNO₃ of 2.2 is obtained. The color of colloidal silver nanoparticles solution changes from light yellow to brown. Then the reaction is maintained for further 20 hours at room temperature. The as-obtained products are then purified by centrifugation for 10 min at speed of 7500 rpm. The brownish-green solution was then purified by centrifugation for 10 min at speed of 7500 rpm.

### Embodiment 4: Synthesis of colloidal silver (Ag) nanoparticles with APTMS capping agent (molar ratio of APTMS-to-AgNO₃ = 3.4)

Silver nanoparticles were synthesized by polyol method. A polyol synthesis involves heating a polyol with an inorganic salt and a capping agent to generate metal colloids. In the case of silver nanostructures, ethylene glycol (EG) 98%, AgNO₃, aminopropyltrimethoxysilane (APTMS) serve as the polyol, inorganic salt and capping agent, respectively.

In a typical procedure, 10 ml of ethylene glycol (EG) 98% in a glass reactor is heated up to 160 °C in an oil bath. It is heated for 60 min while stirring with a speed of 300 rpm. Afterwards 5 ml of EG solution of silver nitrate (0.1M) is added dropwise in a 30 seconds span to the heated EG solution at 160 °C, resulting in the formation of yellow colloidal solution that indicates the formation of silver seeds.

After 5 min of heating at 160 °C, the glass reactor is removed from the oil bath and is stirred at room temperature until the silver solution is cooled-down to the room temperature. Then 0.3 ml of 97% aminopropyltrimethoxysilane (5.55 mol/L), is added dropwise to the 15 ml of the prepared colloidal silver nanoparticles solution at room temperature until the molar ratio APTMS-to-AgNO₃ of 3.4 is obtained. The color of colloidal silver nanoparticles solution changes from light yellow to brown. Then the reaction is maintained for further 20 hours at the room temperature. The as-obtained products are then purified by centrifugation for 10 min at speed of 7500 rpm. The brownish-green solution is then rinsed and centrifuged for 10 min at speed of 7500 rpm. The green-brown solution is kept for the synthesis of silver/polyaniline nanocomposite from embodiments 6, 7 and 8.

### Embodiment 5: Synthesis of colloidal silver (Ag) nanoparticles with APTMS capping agent (molar ratio of APTMS-to-AgNO₃ = 4.4)

Silver nanoparticles were synthesized by polyol method. A polyol synthesis involves heating a polyol with an inorganic salt and a capping agent to generate metal colloids. In the case of silver nanostructures, 10 ml of ethylene glycol (EG) 98%, AgNO₃, aminopropyltrimethoxysilane (APTMS) serve as the polyol, inorganic salt and capping agent, respectively.

In a typical procedure, 10 ml of ethylene glycol (EG) 98% in a glass reactor is heated up to 160 °C in an oil bath. It is heated for 60 min while stirring with a speed of 300 rpm. Afterwards 5 ml of EG solution of silver nitrate (0.1M) is added dropwise in a 30 seconds span to the heated EG solution at 160 °C, resulting in the formation of yellow colloidal solution that indicates the formation of silver seeds.

After 5 min of heating at 160 °C, the glass reactor is removed from the oil bath and is stirred at room temperature until the silver solution is cooled-down to the room temperature. Then 0.4 ml of 97% aminopropyltrimethoxysilane (5.55 mol/L), is added dropwise to the 15 ml of the prepared colloidal silver nanoparticles solution at room temperature until the molar ratio APTMS-to-AgNO₃ of 4.4 is obtained. The color of colloidal silver solution changes from light yellow to brown. Then the reaction is maintained for further 20 hours at room temperature. The as-obtained products are then purified by centrifugation for 10 min at speed of 7500 rpm. The brown-yellow solution is then rinsed and centrifuged for 10 min at speed of 7500 rpm.

### Embodiment 6: Synthesis of silver/polyaniline nanocomposites using nitric acid (HNO₃) as acidic medium

The process takes place in such a way that 2 ml of aniline is added to the 150 ml HNO₃ with concentration of 1 N. After that 0.2 ml of colloidal silver solution prepared in Embodiment 4 is added to the aqueous solution of aniline. After that the reaction mixture with pH = 0.5 was stirred for 15 min and then ultrasonicated for 1 hour. 50 ml of 0.14 M potassium iodate (KIO₃) solution in nitric acid with concentration 1 N is added dropwise in 30 minutes to the 150 ml of the acidic aqueous mixture of aniline and silver. The color of the solution turns from yellow to green. The mixture is stirred for 2 hours at room temperature. To complete the polymerization, the solution is kept in refrigerator to rest for 24 hours. Thereafter the solution is centrifuged at 7500 rpm for 10 min in order to separate green precipitate.

The green precipitate is washed twice with distilled water and 1time with ethanol to remove monomer, oligomer and excess of oxidant. After that follows drying in an oven at 45 °C for 5 hours.

### Embodiment 7: Synthesis of silver/polyaniline nanocomposites using sulphuric acid (H₂SO₄) as acidic medium

The process takes place in such a way that 2 ml of aniline is added to the 150 ml H₂SO₄ with concentration of 1 M. After that 0.2 ml of colloidal silver solution prepared in Embodiment 4 is added to the aqueous solution of aniline. After that the reaction mixture is stirred for 15 min (pH = 0.5) and then it is ultrasonicated for 1 hour. Then 50 ml of 0.14 M potassium iodate (KIO₃) solution in 1 M aqueous sulfuric acid is added dropwise in 30 minutes to the 150 ml of the acidic aqueous mixture of aniline and silver. The color of the solution turns from yellow to green. The mixture is stirred for 2 hours at room temperature. To complete the polymerization the solution is kept in refrigerator to rest for 24 hours and after that, this solution is centrifuged at 7500 rpm for 10 min in order to separate green precipitate.

The green precipitate is washed with double distilled water 3 times and ethanol 1time to remove monomer, oligomer and excess of oxidant. After that follows drying in an oven at 105 °C for 3 hours.

### Embodiment 8: Synthesis of silver/polyaniline nanocomposites using hydrochloric acid (HCl) as acidic medium

The process takes place in such a way that 2 ml of aniline is added to the 150 ml HCI with concentration of 1 M. After that 0.2 ml of colloidal silver solution prepared in Embodiment 4 is added to the aqueous solution of aniline. After that the reaction mixture is stirred for 15 min (pH = 0.5) and then it is ultrasonicated for 1 hour. Then 50 ml of 0.15 M potassium iodate (KIO₃) solution in 1 M aqueous hydrochloric acid is added dropwise in 30 minutes to the 150 ml of the acidic aqueous mixture of aniline and silver. The color of the solution turns from yellow to green. The mixture is stirred for 2 hours at room temperature. To complete the polymerization, the solution is kept in refrigerator to rest for 24 hours and after that, this solution is centrifuged at 7500 rpm for 10 min in order to separate green precipitate.

The green precipitate is washed with double distilled water 3 times and ethanol 1time to remove monomer, oligomer and excess of oxidant, followed by drying in an oven at 105 °C for 2 hours.

Prepared conductive silver/polyaniline nanocomposites and their characteristics are shown in table 1 and in the figure, which show:

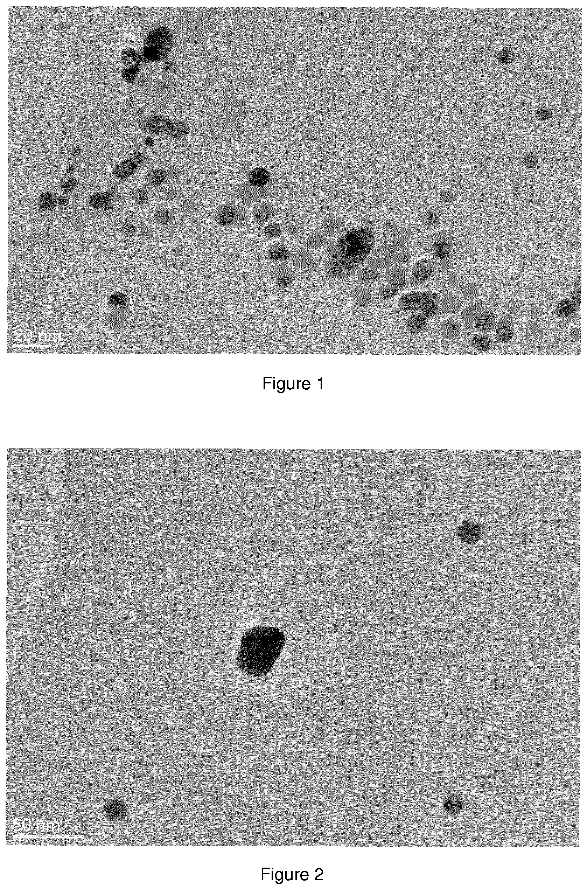

- Figure 1:: Microscopic image of silver nanoparticles prepared according to the Embodiment 1
- Figure 2:: Microscopic image of silver nanoparticles prepared according to the Embodiment 2

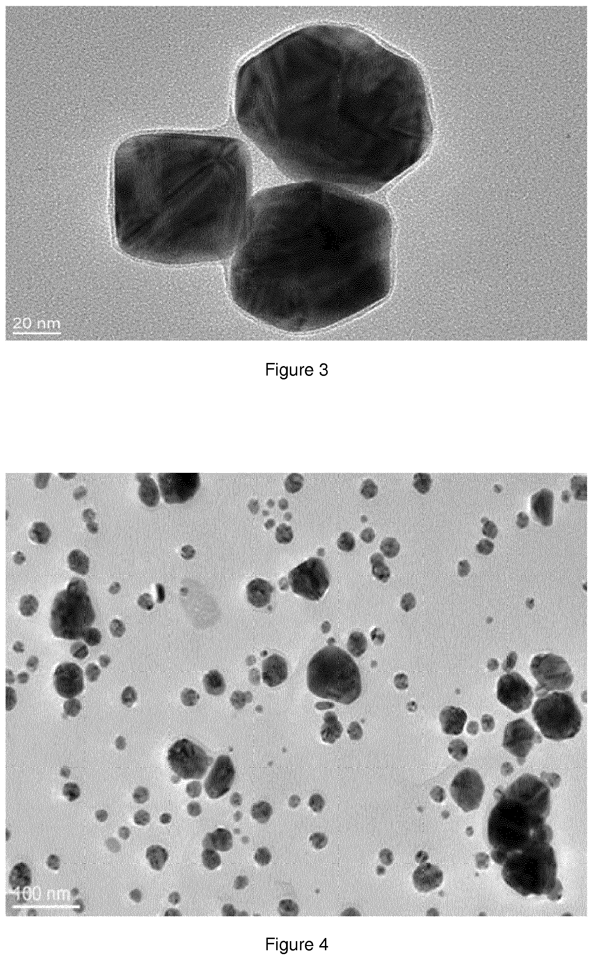

- Figure 3:: Microscopic image of silver nanoparticles prepared according to the Embodiment 3
- Figure 4:: Microscopic image of silver nanoparticles prepared according to the Embodiment 4

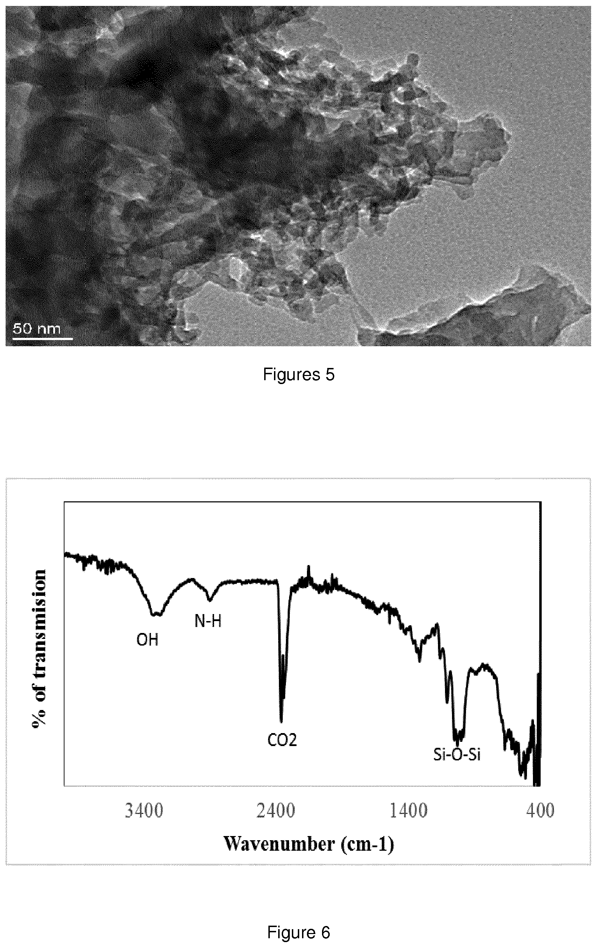

- Figure 5:: Microscopic image of silver/polyaniline nanocomposites prepared according to the Embodiment 6
- Figure 6:: FTIR spectrum of silver/polyaniline nanocomposites prepared according to the Embodiment 6

**Table 1: Characteristics of silver/polyaniline nanocomposites prepared according to Embodiments 6 to 8.**

| Sample | Resistivity (Ω/cm) | Conductivity (S/cm) |
|---|---|---|
| Embodiment 6 | 10 - 12 | 0.1 - 0.08 |
| Embodiment 7 | 300 | 0.0033 |
| Embodiment 8 | 140 | 7 |

The process according to the invention allows preparation of conductive silver/polyaniline nanocomposites with sizes below 100 nm, which are in the polymer matrix with attached silver nanoparticles with particle size of 10 - 20 nm. Silver/polyaniline nanocomposites have conductive properties that allow them to respond to the external electrical field and have a number of possible applications such as various electronic components, in photonics and in photography antibacterial, antistatic, superconductive, biosensor materials, etc.

Silver/polyaniline (Ag/PANI) nanocomposites enable use in textile applications, such as protection for the wearer against electromagnetic radiation or as antistatic material against static electricity, due to their electro conductivity can these composites be used as elements in television receivers, mobile phones, for displays in car dashboards and pilot cabins, light emitting diodes, solar cells, light weight batteries, polymer actuators, as anticorrosive agents, for sensors and other electrical devices.

Moreover, the described process eliminates the use of large quantities of acids and organic solvents as well as extreme reaction conditions that usually accompany preparation processes of conductive nanomaterial, which leads to costs reduction and environmentally friendly technologies.

## Claims

1. A process for synthesis of conductive silver/polyaniline nanocomposites, the process including high-temperature polyol synthesis of colloidal silver nanoparticles solution with particle size distribution 70 ± 20 nm, wherein the high temperature is a temperature up to 160 °C, based on polyol with the use of functional trialkoxysilane molecules as capping agents, followed by admixing of the prepared colloidal silver solution into aniline solution, wherein the molar ratio of APTMS-to-AgNO₃ is from 0.5 to 6.8, and finally the polymerization of aniline monomers using potassium iodate at room temperature in an acidic medium having a pH value 0.5 and aniline-to-potassium iodate molar ratio 1:1.

2. The process for synthesis of conductive silver/polyaniline nanocomposites, according to claim 1, **characterized in that** it comprises the following steps:
- heating of the polyol medium up to 160 °C and polyol synthesis of yellow colloidal ethylene glycol solution of silver seeds;
- cooling of the prepared colloidal ethylene glycol solution of silver seeds to the room temperature and dropwise admixing of functional trialkoxysilanes as capping agents;
- mixing for 20 hours at room temperature, to obtain brownish-green colloidal ethylene glycol solution of silver;
- sedimentation with centrifugation, to obtain brownish-green colloidal solution;
- adding the prepared brownish-green colloidal ethylene glycol solution of silver nanoparticles to the acidic aniline solution with pH value 0.5;
- dropwise addition of potassium iodate acidic solution and formation of green colloidal solution;
- mixing for 2 hours at room temperature and aging of the solution at 3 °C for 24 hours to complete the polymerization process;
- centrifugation and rinsing of the sediment with distilled water, ethanol and drying in the oven at 45 °C for 5 hours.

3. The process for synthesis of conductive silver/polyaniline nanocomposites according to any of the preceding claims, **characterized in that** the synthesis of colloidal silver (Ag) nanoparticles solution with APTMS as capping agent has APTMS-to-AgNO₃ molar ratio of 0.5.

4. The process for synthesis of conductive silver/polyaniline nanocomposites according to any of the preceding claims, **characterized in that** the synthesis of colloidal silver (Ag) nanoparticles solution with APTMS as capping agent has APTMS-to-AgNO₃ molar ratio of 1.0.

5. The process for synthesis of conductive silver/polyaniline nanocomposites according to any of the preceding claims, **characterized in that** the synthesis of colloidal silver (Ag) nanoparticles solution with APTMS as capping agent has APTMS-to-AgNO₃ molar ratio of 2.2.

6. The process for synthesis of conductive silver/polyaniline nanocomposites according to any of the preceding claims, **characterized in that** the synthesis of colloidal silver (Ag) nanoparticles solution with APTMS as capping agent has APTMS-to-AgNO₃ molar ratio of 3.4.

7. The process for synthesis of conductive silver/polyaniline nanocomposites according to claims 2 and 6, **characterized in that** the synthesis of colloidal silver (Ag) nanoparticles solution with APTMS as capping agent has APTMS-to-AgNO₃ molar ratio of 4.4.

8. The process for synthesis of conductive silver/polyaniline nanocomposites according to claims 2 and 6, **characterized in that** the synthesis of silver/polyaniline nanocomposites is carried out with the use of sulphuric acid (H₂SO₄).

9. The process for synthesis of conductive silver/polyaniline nanocomposites according to claims 2 and 6, **characterized in that** the synthesis of silver/polyaniline nanocomposites is carried out with the use of hydrochloric acid (HCl).

10. Use of the conductive silver/polyaniline nanocomposites obtained with the process according to any claim from 1 to 9 as dopants in treatment of textiles, for improving their features like conductivity, antistatic, antimicrobial and fire resistance or improving mechanical properties.

11. Use of conductive silver/polyaniline nanocomposites obtained with the process according to any claim from 1 to 9 in catalysis, conductive inks, adhesives for various electronic components, in photonics and photography, for antibacterial, antistatic, superconductive, biosensor materials.

## Patentansprüche

1. Verfahren zur Synthese von leitfähigen Silber/Polyanilin-Nanokompositen, das Verfahren umfassend eine Hochtemperatur-Polyolsynthese von kolloidaler Silber-Nanopartikel-Lösung mit Teilchengrößenverteilung 70 ± 20 nm, wobei die Hochtemperatur bis zu 160°C beträgt, bezogen auf Polyol, unter Verwendung von funktionellen Trialkoxysilan-Molekülen als Verkappungsmittel, gefolgt von dem Zumischen der vorbereiteten kolloidalen Silberlösung in die Anilinlösung, wobei das molare Verhältnis von APTMS zu AgNO₃ 0,5 bis 6,8 beträgt, und schließlich die Polymerisation von Anilinmonomeren unter Verwendung von Kaliumiodat bei Raumtemperatur in einem sauren Medium mit einem pH-Wert von 0,5 und Molverhältnis von Anilin zu Kalium-Iodat von 1:1.

2. Verfahren zur Synthese von leitfähigen Silber-Polyanilin-Nanokompositen nach Anspruch 1, **dadurch gekennzeichnet, dass** es folgende Schritte umfasst:
- Erwärmen des Polyolmediums bis zu 160°C und Polyolsynthese von gelber kolloidaler Ethylenglykollösung von Silberkeimen;
- Abkühlen der vorbereiteten kolloidalen Ethylenglykollösung von Silberkeimen auf Raumtemperatur und tropfenweise Zumischung von funktionellen Trialkoxysilanen als Verkappungsmittel;
- Mischen für 20 Stunden bei Raumtemperatur, um eine bräunlich-grüne kolloidale Ethylenglykollösung von Silber zu erhalten;
- Sedimentation mit Zentrifugation, um eine bräunlich-grüne kolloidale Lösung zu erhalten;
- Zugabe der vorbereiteten bräunlich-grünen kolloidalen Ethylenglykollösung von Silbernanopartikeln zu der sauren Anilinlösung mit pH-Wert von 0,5;
- tropfenweise Zugabe von Kaliumiodat-saurer Lösung und Bildung von grüner kolloidaler Lösung;
- Mischen für 2 Stunden bei Raumtemperatur und Alterung der Lösung bei 3°C für 24 Stunden zur Vervollständigung des Polymerisationsprozesses;
- Zentrifugation und Spülen des Sediments mit destilliertem Wasser, Ethanol und Trocknen im Ofen bei 45° C für 5 Stunden.

3. Verfahren zur Synthese von leitfähigen Silber-Polyanilin-Nanokompositen nach einem der vorhergehenden Ansprüche, **dadurch gekennzeichnet, dass** die Synthese der kolloidalen Silber-(Ag)-Nanopartikel-Lösung mit APTMS als Verkappungsmittel das Molverhältnis von APTMS zu AgNO₃ von 0,5 aufweist.

4. Verfahren zur Synthese von leitfähigen Silber-Polyanilin-Nanokompositen nach einem der vorhergehenden Ansprüche, **dadurch gekennzeichnet, dass** die Synthese der kolloidalen Silber-(Ag)-Nanopartikel-Lösung mit APTMS als Verkappungsmittel das Molverhältnis von APTMS zu AgNO₃ von 1,0 aufweist.

5. Verfahren zur Synthese von leitfähigen Silber-Polyanilin-Nanokompositen nach einem der vorhergehenden Ansprüche, **dadurch gekennzeichnet, dass** die Synthese der kolloidalen Silber-(Ag)-Nanopartikel-Lösung mit APTMS als Verkappungsmittel das Molverhältnis von APTMS zu AgNO₃ von 2,2 aufweist.

6. Verfahren zur Synthese von leitfähigen Silber-Polyanilin-Nanokompositen nach einem der vorhergehenden Ansprüche, **dadurch gekennzeichnet, dass** die Synthese der kolloidalen Silber-(Ag)-Nanopartikel-Lösung mit APTMS als Verkappungsmittel das Molverhältnis von APTMS zu AgNO₃ von 3,4 aufweist.

7. Verfahren zur Synthese von leitfähigen Silber-Polyanilin-Nanokompositen nach einem der vorhergehenden Ansprüche, **dadurch gekennzeichnet, dass** die Synthese d kolloidalen Silber-(Ag)-Nanopartikel-Lösung mit APTMS als Verkappungsmittel das Molverhältnis von APTMS zu AgNO₃ von 4,4 aufweist.

8. Verfahren zur Synthese von leitfähigen Silber-Polyanilin-Nanokompositen nach den Ansprüchen 2 und 6, **dadurch gekennzeichnet, dass** die Synthese von Silber/Polyanilin-Nanokompositen unter Verwendung von Schwefelsäure (H₂SO₄) erfolgt.

9. Verfahren zur Synthese von leitfähigen Silber-Polyanilin-Nanokompositen nach den Ansprüchen 2 und 6, **dadurch gekennzeichnet, dass** die Synthese von Silber/Polyanilin-Nanokompositen unter Verwendung von Salzsäure (HCl) erfolgt.

10. Anwendung von leitfähigen Silber-Polyanilin-Nanokompositen, erhalten durch das Verfahren nach einem der Ansprüche 1 bis 9 als Dotiermittel zur Behandlung von Textilien, zur Verbesserung ihrer Eigenschaften wie Leitfähigkeit, antistatischer, antimikrobieller Eigenschaften und zur feuerfesten Beständigkeit oder zur Verbesserung der mechanischen Eigenschaften.

11. Anwendung von leitfähigen Silber-Polyanilin-Nanokompositen, erhalten durch das Verfahren nach einem der Ansprüche 1 bis 9, in Katalyse, in leitfähigen Tinten, Klebstoffen für verschiedene elektronische Bauteile, in Photonik und Photographie, für antibakterielle, antistatische, supraleitende Biosensormaterialien.

## Revendications

1. Un procédé de synthèse de nanocomposites d'argent/polyaniline conducteurs, le procédé comprenant la synthèse polyol à haute température d'une solution de nanoparticules d'argent colloïdal dont les particules présentent une distribution de taille de 70 ± 20 nm, la haute température allant jusqu'à 160 °C, à base de polyol avec l'utilisation de molécules fonctionnelles de trialcoxysilane en tant qu'agents de coiffage, suivie par le mélange de la solution d'argent colloïdal préparée en solution d'aniline, le rapport molaire APTMS sur Ag₃ étant de 0,5 à 6,8, et enfin la polymérisation de monomères d'aniline à l'aide d'iodate de potassium à température ambiante dans un milieu acide ayant une valeur de pH de 0,5 et un rapport molaire aniline sur iodate de potassium de 1 : 1.

2. Le procédé de synthèse de nanocomposites d'argent/polyaniline conducteurs selon la revendication 1, **caractérisé en ce qu'**il comprend les étapes suivantes :
- chauffage du milieu polyol jusqu'à 160 °C et synthèse polyol de solution d'éthylène glycol colloïdale jaune de germes d'argent ;
- refroidissement de la solution préparée d'éthylène glycol colloïdale de germes d'argent à la température ambiante et mélange goutte à goutte de trialcoxysilanes fonctionnels en tant qu'agents de coiffage ;
- mélange pendant 20 heures à température ambiante pour obtenir une solution colloïdale brun-vert d'éthylène glycol d'argent ;
- sédimentation avec centrifugation pour obtenir une solution colloïdale brunâtre-verte;
- ajout de la solution colloïdale préparée d'éthylène glycol brunâtre-vert de nanoparticules d'argent à la solution d'aniline acide avec une valeur de pH de 0,5 ;
- ajout goutte à goutte de solution acide d'iodate de potassium et formation d'une solution colloïdale verte ;
- mélange pendant 2 heures à température ambiante et vieillissement de la solution à 3 °C pendant 24 heures pour terminer le processus de polymérisation ;
- centrifugation et rinçage du sédiment avec de l'eau distillée, de l'éthanol et séchage dans le four à 45 °C pendant 5 heures.

3. Le procédé de synthèse de nanocomposites d'argent/polyaniline conducteurs selon l'une quelconque des revendications précédentes, **caractérisé en ce que** la synthèse de nanoparticules d'argent colloïdal (Ag) avec APTMS comme agent de coiffage a un rapport molaire APTMS sur AgNO₃ de 0,5.

4. Le procédé de synthèse de nanocomposites d'argent/polyaniline conducteurs selon l'une quelconque des revendications précédentes, **caractérisé en ce que** la synthèse de nanoparticules d'argent colloïdal (Ag) avec APTMS comme agent de coiffage a un rapport molaire APTMS sur AgNO₃ de 1,0.

5. Le procédé de synthèse de nanocomposites d'argent/polyaniline conducteurs selon l'une quelconque des revendications précédentes, **caractérisé en ce que** la synthèse de nanoparticules d'argent colloïdal (Ag) avec APTMS comme agent de coiffage a un rapport molaire APTMS sur AgNO₃ de 2,2.

6. Le procédé de synthèse de nanocomposites d'argent/polyaniline conducteurs selon l'une quelconque des revendications précédentes, **caractérisé en ce que** la synthèse de nanoparticules d'argent colloïdal (Ag) avec APTMS comme agent de coiffage a un rapport molaire APTMS sur AgNO₃ de 3,4.

7. Le procédé de synthèse de nanocomposites d'argent/polyaniline conducteurs selon les revendications 2 et 6, **caractérisé en ce que** la synthèse de nanoparticules d'argent colloïdal (Ag) avec APTMS comme agent de coiffage a un rapport molaire APTMS sur AgNO₃ de 4,4.

8. Le procédé de synthèse de nanocomposites d'argent/polyaniline conducteurs selon les revendications 2 et 6, **caractérisé en ce que** la synthèse de nanocomposites d'argent/polyaniline est réalisée à l'aide d'acide sulfurique (H₂SO₄).

9. Le procédé de synthèse de nanocomposites d'argent/polyaniline conducteurs selon les revendications 2 et 6, **caractérisé en ce que** la synthèse de nanocomposites d'argent/polyaniline est réalisée à l'aide d'acide chlorhydrique (HCl).

10. Utilisation de nanocomposites d'argent/polyaniline conducteurs obtenus par le procédé selon l'une quelconque des revendications 1 à 9 en tant que dopants dans le traitement de textiles, pour améliorer leurs caractéristiques comme la conductivité, le caractère antistatique, antimicrobien et la résistance au feu ou pour améliorer des propriétés mécaniques.

11. L'utilisation de nanocomposites d'argent/polyaniline conducteurs obtenus par le procédé selon l'une quelconque des revendications 1 à 9 en catalyse, encres conductrices, adhésifs pour divers composants électroniques, en photonique et photographie, pour matériaux antibactériens, antistatiques, supraconducteurs, biocapteurs.
